# EUROPEAN PATENT SPECIFICATION

(11) **EP 2 341 680 B1**
(45) Date of publication and mention of the grant of the patent: **01.07.2015**
(21) Application number: 09180970.7
(22) Date of filing: 30.12.2009
(51) Int. Cl.: H04L 29/06, H04L 29/08

(54) **Method and apparatus for adaptation of a multimedia content**
Verfahren und Vorrichtung zur Anpassung eines Multimediainhalts
Procédé et appareil d'adaptation de contenu multimédia

(43) Date of publication of application: 06.07.2011
(73) Proprietor: Nokia Solutions and Networks Oy, 02610 Espoo (FI)
(72) Inventor: Arsenio, Artur, 2795, Queijas (PT)
(74) Representative: Borgström, Markus

(56) References cited:
- WO-A2-2007/082190
- US-A1- 2002 188 959
- US-A1- 2006 187 358
- JACK BRASSIL ET AL: "Structuring Internet Media Streams With Cueing Protocols" IEEE / ACM TRANSACTIONS ON NETWORKING, IEEE / ACM, NEW YORK, NY, US, vol. 10, no. 4, 1 August 2002 (2002-08-01) , pages 466-476, XP011077174 ISSN: 1063-6692
- BRASSIL J ET AL: "Large-scale personalized video streaming with program insertion proxies" IEEE COMMUNICATIONS MAGAZINE, IEEE SERVICE CENTER, PISCATAWAY, US LNKD- DOI:10.1109/MCOM.2004.1321400, vol. 42, no. 8, 1 August 2004 (2004-08-01) , pages 104-110, XP011115858 ISSN: 0163-6804

## Description

The invention relates to a method and an apparatus for adaptation of a multimedia content.

[JACK BRASSIL ET AL: "Structuring Internet Media Streams With Cueing Protocols" IEEE / ACM TRANSACTIONS ON NETWORKING, IEEE / ACM, NEW YORK, NY, US, vol. 10, no. 4, 1 August 2002 (2002-08-01)] relates to a media-independent protocol for including program timing, structure, and identity information in Internet media streams. The protocol uses signaling messages, also referred to as "cues", to indicate events whose timing is significant to receivers, such as the start or stop time of a media program.

US 2002/188959 A1 relates to a system and a method that allow viewers of video/TV programs to automatically, or by request, receive synchronized supplemental multimedia information related to the video/TV programs. The supplemental multimedia information is received as an Internet document, e.g., using Synchronized Multimedia Integration Language (SMIL). Synchronizing information is received or extracted from the video/TV program. The synchronizing information may be in the form of keyframes, image triggers extracted using image recognition technology, time codes or Closed Captioning (CC) and Extended Data Services (EDS) codes. The video/TV program and the supplemental multimedia information are then displayed as a virtual web page.

WO 2007/082190 A2 relates to an apparatus and methods operable to distribute targeted content. The corresponding apparatus and methods are operable to selectively choose and cache selected ones from among the distributed targeted content, and to further choose ones from among the cached content to present on a device. Selective caching of content may be based upon a match between predetermined content attribute information and predetermined profile information. An indicator is operable to trigger the selective inclusion of one or more of the cached content in a presentation of other content, which may be based on a match between a desired content attribute associated with the indicator and the respective predetermined content attribute information of the cached content.

US 2006/187358 A1 relates to a method and a system for detection of video segments in compressed digital video streams. The compressed digital video stream is examined to determine synchronization points, and the compressed video signal is analyzed following detection of the synchronization points to create video fingerprints that are subsequently compared against a library of stored fingerprints.

[BRASSIL J ET AL: "Large-scale personalized video streaming with program insertion proxies" IEEE COMMUNICATIONS MAGAZINE, IEEE SERVICE CENTER, PISCATAWAY, US LNKD-DOI:10.1109/MCOM.2004.1321400, vol. 42, no. 8, 1 August 2004 (2004-08-01)] relates to intelligent Internet overlay networks to deliver streaming media and value-added media services in ways that cannot be achieved easily with conventional broadcast networks. Such an overlay would allow an individual viewer or groups of viewers to receive unique programming content (e.g., commercial advertisements, entertainment) that matches their previously specified preferences. Scalable overlay network architecture and signaling mechanism are discussed that permit dynamic program insertions in live high-quality video streams transmitted over IP networks.

Various methods exist for processing of multimedia content, in particular audio and video content, in order to enrich the multimedia content e.g. with information or entertainment or other contributions and thus make listening or viewing more attractive. For instance with current broadcast or multicast channels infotainment content can be provided by a temporary interruption of the multimedia content, in particular a TV program, at an operator defined time for a subsequent provisioning of e.g. an interview, a news report or an advertisement, that then is provided to all listeners or viewers of the broadcast or multicast channel.

Furthermore, methods exist, which by means of usage of insertion techniques directly add e.g. infotainments into a multimedia content. An example for such a method is the insertion of news ticker information. Moreover, recognition and substitution algorithms may be used to automatically detect event triggers for delivering an infotainment and for convenient insertion of the infotainment into a multimedia content, in particular a TV program.

Also individual adaptations of a multimedia content for a single viewer or listener are possible. Disadvantages are however use of unicast transmission and resulting high network load, when provided for a large number of users in parallel. Further disadvantages are high capital investments, when to be available for real time or life programs, for which the individual adaptations have to be decided upon and executed on the fly with minimum delay implying high performance requests for central processing platforms in the network.

It is, therefore, a need in the prior art to provide an improved efficient usage of network resources and network load distribution for a network operator or application service providers offering user group specific or user individual adaptation of a multimedia content, in particular when to be provided under real time conditions to a large user, i.e. listener and/ or viewer, community.

This need is accomplished according to the features of the independent claims. Further depending claims refer to specific embodiments of the present invention.

According to an embodiment of the present invention there is provided a method for adaptation of a first multimedia content comprising the steps:
- receiving said first multimedia content;
- receiving control data and at least one second multimedia content, wherein said control data are streamed over a channel;
- determining at least one replacement specification on the basis of said control data and a profile information;
- identifying at least one replaceable object in said first multimedia content according to said at least one replacement specification;
- creating a third multimedia content by adapting said at least one replaceable object in said first multimedia content on the basis of said at least one second multimedia content and said at least one replacement specification;
- providing said third multimedia content according to said profile information.

The method allows adaptation of the first multimedia content on the basis of the control data, which are provided as streamed data over a channel, and the at least second multimedia content. This provides the advantage that existing network equipment devices and terminal devices that are able to receive said channel are sufficient to execute the method de-centrally and to adapt the first multimedia content according to the data stream provided over said channel. A further advantage results from the fact, that said channel may be provided by point-to-multipoint transmission techniques, in particular by broadcasting or multicasting, thus making use of most economical communication network functionalities. On the basis of e.g. de-centrally or locally available profile information advantageously relevant replacement specifications can be determined, allowing creation of an individually adapted or for a number of terminal devices, e.g. the terminal devices of a geographical region, the terminal devices of a city, or a group of terminal devices, adapted third multimedia content. Thus the advantage of usage of de-central processing resources in particular for individualization of the first multimedia content together with the advantage of low network load is provided.

A multimedia content may comprise a television program, a video on demand, a radio program, an audio on demand, an electronic game, an electronic book, an on demand provided multimedia content, a motion picture, a video clip, a record of a television or audio program, a video message, a voice message, a complete or partial record of a television or audio program, an audio content, an internet page, a walled garden page, picture material, audio material, a fixed picture, a moving picture, a live signal of a television or radio program, an arbitrary combination of the preceding contents or an arbitrary combination of the preceding contents with further contents. A multimedia content may in particular be an email, an SMS or any other form of an electronic message. A multimedia content may comprise at least one video part, and/or at least one audio part, and/or additional data, as for instance video text, subtitle information, EPG/ESG information, now and next information, access information and data for interactive services. In particular may a multimedia content comprise data of an MPEG coded information stream of a TV channel or of a video provided on demand.

Receiving streamed data or content over a channel may include receiving of the streamed data or content from a source address of an originating device or an address of an intermediate device in the path from an originating device to a receiving device. In particular such address can comprise a packet address in a packet network, an IP address and a port address related to an IP address. Receiving of streamed data or content over a channel as well may include reception via terrestrial or satellite antenna or via cable networks e.g. by tuning to a channel address and/or a transmission frequency.

A replacement specification for the first multimedia content related to at least one second multimedia content defines how a portion, part, region, area, object of the first multimedia content can be identified and how it shall be replaced by usage of the at least one second multimedia content. The identification may include in particular a successful recognition with a given probability. The identification may also simply be by evaluation of location information such as time, coordinates, form and /or size information. The replacement specification may comprise a name of or a reference to an audio, video, or audio & video detection algorithm including parameter information for the detection algorithm, e.g. detection probabilities, detection objects, object classes. The replacement specification may comprise, a name of an audio, video or audio & video replacement algorithm including parameter information for the replacement algorithm. This parameter information for the replacement algorithm may comprise e.g. indication, that insertion of an overlay, replacement without overlay, frame-wise operation, muting or loudness correction for a certain time, e.g. the duration of the replacement, insertion and/or replacement with a fixed or changing zoom factor, orientation, coordinates information, quality, resolution, and delay may be intended. The replacement specification may include one or more replaceable objects, each allowing reference to the at least one multimedia content. The replacement specification may as well comprise time information, e.g. a begin time, an end time, a repetition time, a time period or number of repetitions, a rule for determination of a number of repetitions and/or a number of time intervals. The replacement specification may as well comprise position coordinate information and/or orientation information for an object.

A replaceable object may be any identifiable part, portion, region, area of the first multimedia content. The replaceable object can be a fixed size region in a picture or in a video, the latter possibly limited over time by a time period. The replaceable object can as well be a moving and/or with respect to size changing predefined part, portion, region, area of a picture or video. The replaceable object can be an object depicted in a picture or a moving object in a video, e.g. a car or an actor. The replaceable object can as well be a part, portion, region, area of a multimedia content, where a certain type of content is probable to occur in nature. The execution of a replacement specification may lead to replacement of a replaceable object with the at least one second multimedia content or parts of it. The execution of a replacement specification might as well lead to replacing the replaceable object by a transformation of the at least one second multimedia content according to the needs of the replaceable object, e.g. a spatial, size, color and brightness adapted replacement of a replaceable object leading to a correctly three-dimensional oriented object replacement. A replaceable object may as well be or comprise an audio information part or portion in/of the first multimedia content.

Profile information may comprise location information of an intermediate device in the transmission path to a receiving device, a transmission link, a transmission link bundle, a user device, a user group, a geographic region, that is available in an terminal device or in an intermediate device in the transmission path to the terminal device. Profile information assigned to replacement specifications can be compared with the profile information available for the intermediate and terminal devices with respect to determination or selection of relevant replacement specifications.

A terminal device receives data or content streams, e.g. via an internet connection, e.g. a DSL based connection, another circuit based connection as for example via Ethernet, PCM, SDH, wireless or cordless connection, as for example via WLAN, Bluetooth. The terminal device may separate the data streams into audio, video and data, decodes and /or decompresses and delivers in general a video and audio signal to an integrated or external video /audio output device. Examples of terminal devices are in particular Set Top Boxes (STB), television devices (TV), personal computers (PC), Laptops, mobile phones, other mobile devices as for instance PDAs, organizers, music players.

An output device can be an output unit or device for an audio signal, an output unit or device for a video signal, or an output unit or device for an audio- and video signal. An output device can be integrated in a device, in particular an terminal device, or it can be separate from an terminal device and formed to connect to an terminal device. An output device can for example be a television device, a loud speaker, a monitor, a display of a mobile or non-mobile terminal device, a head set.

In an embodiment said at least one second multimedia content is streamed over said channel.

This has the further advantage that the at least second multimedia content and said control data can be provided in the same channel, and no further channels or other distribution mechanisms including related communication and resources are required. As well it is advantageous, that with using said channel the at least second multimedia content may be a life signal that is ordinarily broad-/ multicasted to the terminal devices what enables instantaneous adaptation of the first multimedia content, thus enriching said third multimedia content e.g. with brand new information and pictures on the base of life programs.

In another embodiment the method comprises the steps:
- filtering said channel according to said profile information by deletion of parts of said control data and/or by deletion of at least one of said at least one second multimedia content, and;
- providing said filtered channel according to said profile information.

Thus advantageously a step wise adaptation of the first multimedia content can be supported. For example a DSLAM to which a set of terminal devices is connected, may determine and execute those replacement specifications that are of relevance for a number of terminal devices, e.g. set top boxes, which are connected to the DSLAM. The DSLAM may provide the accordingly created third multimedia content to said set of terminal devices connected to the DSLAM. Furthermore, the DSLAM may provide said filtered channel to said set of terminal devices connected to the DSLAM, wherein control data and /or multimedia content advantageously are removed, that are needed only for creation of said third multimedia content by the DSLAM. The terminal devices thus receive said third multimedia content and said filtered channel for subsequent execution of the method. This creates the advantage that adaptations that can be provided centrally need not be provided by each of the terminal devices, by this advantageously saving processing capacity of the terminal devices and reserving processing capacity of the terminal devices for replacement specifications of individual interest results. This embodiment may also be applied for home network configurations, in which e.g. a family or more generally a user group is connected to a master terminal device or a gateway device, that itself is connected to a network device, e.g. a network edge device like e.g. a DSLAM.

According to another embodiment the method comprises the steps:
- receiving additional control data streamed over an additional channel;
- aggregating said control data, said additional control data, and said at least one second multimedia content into an aggregated channel;
- providing said aggregated channel according to said profile information.

This embodiment provides the advantage that additional control data allowing determination of additional replacement specifications may be remotely provided by a second application service provider, whereas said control data may be provided by a network operator or a first application service provider. Advantageously aggregation into an aggregated channel can be achieved and the aggregated channel may be provided to network edge devices, in particular to a DSLAM, or to terminal devices for a subsequent execution of the method. Via such subsequent execution of the method users according to local available or accessible profile information may benefit from adaptations of the first multimedia content relating to replacement specifications locally determined on the basis of the additional control data. Advantageously the aggregated channel may according to profile information only be provided to a part of the network edge devices and /or terminal devices including those devices that are in need of the additional control data. More generally the aggregation may comprise additional control data and additional second multimedia content provided by said second application service provider. As well the embodiment comprises the case of a plurality of application service providers providing additional control data and optionally at least an additional second multimedia content each, in which case the aggregated channel may comprise at least said control data, said at least second multimedia content as well as additional control data of each of said plurality of application service providers. Furthermore for this case, the aggregated channel may comprise at least one additional second multimedia content provided by one of said plurality of application service providers. With that the advantage is provided, that without changes of the network infrastructure or the capabilities of network equipment or the terminal devices a plurality of application service providers are enabled to contribute highly topical contributions with respect to the first multimedia content for individualization of the viewing and listening experience within a large community of viewers or listeners. Advantageously for this purpose said plurality of application service providers needs not execute any adaptations of the first multimedia content. Those adaptations of the first multimedia content, that are of relevance even if provided by different application service providers for the same time period, will be executed locally or by a network edge device.

According to another embodiment the method comprises the step:
- decoding and/or decompressing said first multimedia content and/or said at least one second multimedia content.

With that according to the needs of transport systems coded and/or compressed multimedia content can be processed. The decoding may comprise any type of decryption.

According to yet another embodiment the method may comprise the step:
- compressing and/or coding of said third multimedia content in dependency of said profile information.

The compressing and/or coding may depend on the type of a device that receives said third multimedia content. In particular an output device may need the third multimedia content as decompressed and decoded information (e.g. AV interface) or might need a special type of coding and/or compression (e.g. HDMI compliant coding). A device receiving said third multimedia content can in particular be a terminal device, e.g. a set top box, or an output device, e.g. a television connected to a set top box. The coding may comprise any type of encryption.

According to a further embodiment said profile information comprises at least one of the following:
- a user profile information;
- a user group profile information:
- an address information assigned to an terminal device of a user;
- an address information assigned to a user group;
- an identification of a geographic area or a location;
- an address information assigned to geographic area or location;
- a type of a device receiving said first multimedia content;
- a type of a device receiving said third multimedia content;
- a type of a link, connection, or transmission path to a device receiving said first or said third multimedia content;
- a plurality of terminal device addresses.

The profile information may be completely or partially stored locally in a network equipment device or a terminal device and/or the profile information may completely or partially be remotely accessible by the network equipment device or the terminal device. The profile information may be created and/or updated by local input or by remote configuration.

According to a further embodiment said first multimedia content is streamed over a further channel.

With that in particular life multimedia content provided via broadcast or multicast channels can advantageously be individually adapted.

It is a further embodiment that said control data include a first reference to said first multimedia content and/or a set of channel references.

The first reference to the first multimedia content advantageously relates said control data or parts of said control data to the first multimedia content, which is to be adapted accordingly. Said first reference in particular allows identification of the first multimedia content with respect to channel number and begin time. For this identification program information, e.g. EPG or ESG information, may be evaluated. As well a number of channel references may be included. In case the first multimedia content is available over more than one channel, the set of channels, for which an adaptation is intended, can advantageously be specified by said set of channel references. The set of channel may also cover application cases, in which the adapting is to be extended to any multimedia content provided over at least one of the set of referenced channels.

Pursuant to another embodiment control data include a second reference to said at least one second multimedia content.

The second reference advantageously allows determination of how to access said at least one second multimedia content. If provided with said channel, the second reference may be a begin time of the second multimedia content. If provided outside said channel, the second reference may allow determination of a channel number or source address information and a begin time or availability information. Determination of access information of the at least one second multimedia content may require evaluation of program information, e.g. EPG or ESG information, on the basis of the second reference.

According to a further embodiment said third multimedia content in dependency of said profile information is provided as streamed content via point-to-point, unicast, point-to-multipoint, multicast or broadcast transmission.

The profile information may advantageously comprise information allowing a device providing said third multimedia content to decide how to provide the third multimedia content. For instance a set top box connected to an output device via HDMI cable, will use an appropriate point-to-point protocol for transmission of the third multimedia content. A set top box in a home network e.g. providing the third multimedia content to further set top boxes of the home network may advantageously on the base of profile information reflecting the home network topology provide the third multimedia content via multicast. A DSLAM providing an individual adaptation of said first content for a certain terminal device connected to the DSLAM will due to profile information allowing individual adaptations for the terminal device by the DSLAM and due to type of adaptation use unicast transmission. The profile information may result from local input via a control device or a remote control device. The profile information may result also from inputs of a network operator or an application service provider that are transmitted over a network. As well the profile information or parts thereof may be transported via said channel.

According to yet another embodiment said channel is provided via unicast, multicast or broadcast mode.

Pursuant to another embodiment said at least one second multimedia content comprises object name information and object attribute information.

Thus the at least one second multimedia content is advantageously enriched with information for decoding and/or processing purposes and for content classification. In particular object name information may enable referencing of the at least second multimedia content or parts thereof by means of said control data, object attribute information may comprise coding information (e.g. "JPG", "MPEGx", "MP3", "txt"), object type information, (e.g. watch, car,...) and object class information (e.g. automobile) may classify the at least one second multimedia content.

According to another embodiment said replacement specification comprises a frame-wise video and/or audio recognition for said identification of said at least one replaceable object, and said replacement specification comprises a frame-wise adaptation for said adapting of said at least one replaceable object.

Thus also a moving replaceable object in the first multimedia content can be detected and appropriately be adapted by an intended object. For instance a car racing in the first multimedia content with an automobile of type 1 in red color may be substituted by a car racing in the third multimedia content with an automobile of type 2 in blue color.

Pursuant to another embodiment said replacement specification comprises evaluation of MPEG-4 tagging information for said identification of said at least one replaceable object.

This provides the advantage, that available tagging information can be used for said adapting, thus reducing performance needed for said adapting.

According to a further embodiment of the present invention there is provided an apparatus for adaptation of a first multimedia content comprising:
- a receiving unit receiving said first multimedia content, control data and at least one second multimedia content, wherein said control data are streamed over a channel;
- a processing unit determining at least one replacement specification on the basis of said control data and a profile information, identifying at least one replaceable object in said first multimedia content according to said at least one replacement specification, and creating a third multimedia content by adapting said at least one replaceable object in said first multimedia content on the basis of said at least one second multimedia content and said at least one replacement specification; and
- a provisioning unit providing said third multimedia content according to said profile information.

In yet another embodiment said receiving unit decompresses and/or decodes said first multimedia content and/or said at least one second multimedia content;

According to another embodiment said provisioning unit compresses and/or codes the third multimedia content in dependency of said profile information.

Pursuant to another embodiment said apparatus comprises a communication device, in particular a communication device being or being associated with one of the following:
- a set top box;
- a television;
- a computer;
- a server;
- a user device;
- a phone;
- a personal digital assistant;
- a component of the first network;
- a server;
- a streaming and/or content server;
- a core/edge router;
- an access network DSLAM;
- DSL modem.

According to a further embodiment said at least one second multimedia content is streamed over said channel, wherein said processing unit filters said channel according to said profile information by deletion of parts of said control data and/or by deletion of at least one of said at least one second multimedia content and wherein said provisioning unit provides said filtered channel according to said profile information.

Pursuant to another embodiment said at least one second multimedia content is streamed over said channel, wherein said receiving unit receives additional control data streamed over an additional channel, wherein said processing unit aggregates said control data, said additional control data, and said at least one second multimedia content into an aggregated channel, wherein said provisioning unit provides said aggregated channel according to said profile information.

Embodiments of the invention are shown and illustrated in the following figures:
- Fig.1: presents a flow diagram showing essential method steps;
- Fig.2: presents a simplified block diagram of an embodiment for illustration of an information flow over a channel providing control data and at least one second multimedia content for adaptation of a first multimedia content;
- Fig.3: presents a simplified block diagram of an embodiment for illustration of an adaptation of a frame structured first multimedia content;
- Fig.4: presents simplified network architecture and data flows for embodiments illustrating creation of third multimedia content by a terminal device and a network device;
- Fig.5: presents simplified data formats of an embodiment for illustration of aggregation of control data provided over different channels;

- Fig.6: presents a simplified block diagram of embodiments for illustration of individual adaptation of a frame structured first multimedia content;
- Fig.7: presents a simplified block diagram of an embodiment for illustration of an apparatus for adaptation of a first multimedia content.

The making and using of presently preferred embodiments are discussed in detail below. It should be appreciated, however, that the present invention provides many applicable inventive concepts that can be embodied in a wide variety of specific contexts. The specific embodiments discussed are merely illustrative of specific way to make and use the invention, and do not limit the scope of the invention. Moreover, same reference signs refer to same technical features, if not stated otherwise. As far as "may" is used in this application, it means the possibility of doing so as well as the actual technical implementation.

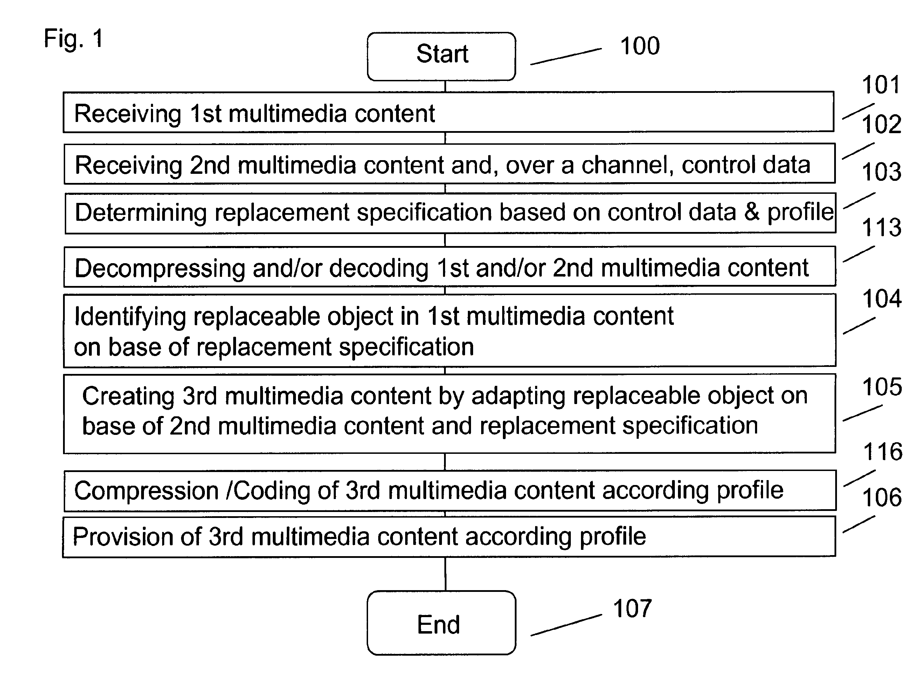

**Fig.1** presents a flow diagram showing essential method steps of a first embodiment for adaptation of a first multimedia content. After a start (step 100) the first multimedia content is received in a step 101. The first multimedia content may be any multimedia content, in particular a streamed multimedia content provided over a network e.g. a TV program. A device receiving the first multimedia content may be any terminal device connected to a network or any network device being in or part of the network. In particular the device receiving the first multimedia content may be a network edge device, e.g. a DSLAM, or it may be a terminal device, e.g. a set top box. The first multimedia content may be received as streamed content over a network, but it may as well be downloaded over a network or delivered as stored content on a versatile data storage, e.g. a CD, a DVD, a blu-ray disk, a USB storage, a hard disc storage, or provided in any mix or combination of the above mentioned or other delivery methods.

In a step 102 control data are received as streamed data over a channel. The channel can in particular be a channel of IPTV, mobile TV, satellite TV, terrestrial TV, or cable TV solutions. Moreover at least one second multimedia content is received. For the receiving of the at least one second multimedia content all delivery options described above with respect to receiving the first multimedia content are possible. In particular the at least one second multimedia content may be provided as streamed content over said channel.

With execution of the steps 101 and 102 the device executing the method steps may be in the process of receiving the first multimedia content, the control data and the at least one second multimedia content, that each may have been received partially or completely.

In a step 103 at least one replacement specification is determined on the basis of said control data and a profile information. The step 103 may preferably be executed as soon as such determination is possible in view of the part of the control data available in the device executing the method steps. The control data e.g. may comprise a reference to frames 6 - 60 of the first multimedia content. Furthermore, the control data may include position coordinate information relative to a frame of the first multimedia content and a size information relative to a frame. Moreover, the control data may include a reference to the at least one second multimedia content, wherein the at least one second multimedia content may for instance be a picture, a text, or any combination of a picture and a text, e.g. a logo of a company with a given size that may be used to advertise for products of the company. With these control data the at least one replacement specification could be the specification to replace in frames 6-60 the original content of the first multimedia content determined by the coordinate information and the size information by a size and position adapted copy of the at least one second multimedia content. Execution of the replacement specification can for example make said company logo appear beginning with frame 6 of the first multimedia content, changing its size and position in the following frames till frame 60 and then disappear. The control data may for example further comprise a profile information indicating, that the replacement specification is to be executed in all DSLAM nodes in Munich. By access to locally available profile information the device executing the method steps is able, to determine if the control data comprise a replacement specification with relevance for the device. Given the example above a DSLAM located in Munich will determine the above described replacement specification, a different device executing the method steps will not determine the above described replacement specification.

In a step 113 the device executing the method steps decompresses and or decodes the first and/or the second multimedia content, if this is necessary.

In a step 104 at least one replaceable object is identified in the first multimedia content on base of the at least one replacement specification. Given the example above, the identification is already accomplished by the per frame available coordinate and size information together with the frame number information. According to another example the replacement specification might define the replaceable object to be a stationary place in the first multimedia content. Such stationary place on the stream of the first multimedia content might e.g. be a wall that does not change its position during a scene of the first multimedia content. According to the other example the control data may comprise a reference to a detection algorithm capable of detecting a stationary place in the first multimedia content.

In a step 105 with availability of at least relevant parts of the first and the at least second multimedia content a third multimedia content is created by adapting the at least one replaceable object in the first multimedia content on the basis of the at least one second multimedia content and the at least one replacement specification. Given the examples described above the third multimedia content can be created by insertion of said company logo according to said coordinate and said size information into the first multimedia content. According to the other example provided above the third multimedia content can be created by insertion of said company logo into a detected stationary place of the first multimedia content, wherein the insertion may be temporarily limited by the control data and the replacement specification respectively.

In a step 116 the third multimedia content may be compressed and /or coded according to the needs of transmission to a subsequent device, wherein the necessity and the details of compression /coding algorithm and parameters may be stored as locally available or locally accessible profile information for the device executing the method steps.

In a step 106 the third multimedia content is provided according to said profile information. In particular a type of link, connection or transmission path to a device receiving the third multimedia content may be a criterion to determine, how the third multimedia content is to be provided. For example the third multimedia content may be provided via A/V or HDMI interface to an output device or via IP based streaming in particular to a terminal or network edge device. Locally available or accessible profile information may comprise configuration data as described above in order to decide, how to provide the third multimedia content by the device executing the method steps.

The method ends with step 107.

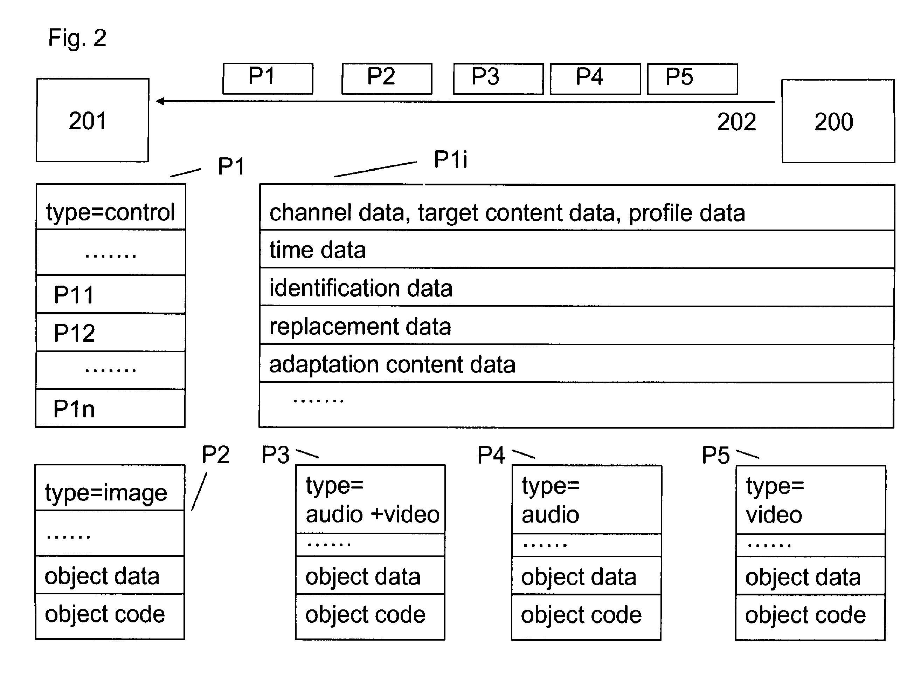

**Fig.2** presents a simplified block diagram of an embodiment for illustration of an information flow over a channel 202 providing control data P1 and at least one second multimedia content P2, P3, P4, P5 for adaptation of a first multimedia content.

Channel 202 is provided by a network element 200. The network element 200 can for example be an IGMP multicast router of an IP based network. It can as well be a satellite or terrestrial antenna e.g. providing said channel according to DVB-S or DVB-T standards. It also can be a CMTS equipment providing channel 202 via a cable network, e.g. according to DVB-C standard.

Channel 202 is received by a processing element 201. The processing element 201 may be a terminal device, e.g. a set top box, appropriate for termination of said channel 202 or a network element, e.g. a DSLAM, for further distribution of channel 202 to terminal devices or other network elements. As depicted, channel 202 transports said control data P1 together with the at least one second multimedia content P2, P3, P4, P5. Said transport may be packet based including techniques to assure quality of service, e.g. in time availability, transmission sequence integrity and low packet loss by appropriate measures like for example segmentation, sequencing, multiplexing and/or FEC.

The control data P1 from logical point of view comprise amongst other information in particular a type information (type=control) indicating that the packet transports control data. According to the depicted embodiment of Fig.2 the control data P1 comprise control data blocks P11, P12, P1n, wherein each control data block is structured like a control data block P1i.

The control data block P1i may comprise channel data. Said channel data may comprise one or more channel references or a reference to a list of channel references, wherein said adaptation of said first multimedia content may be limited to said channels.

The control data block P1i may further comprise target content data. Said target content data may comprise a name of or reference to the first multimedia content or an addressable part thereof.

The control data block P1i may further comprise profile data. Said profile data may comprise information, where the control data block P1i is of relevance, in particular the profile data may indicate global relevance, country-wide relevance, regional relevance, user group relevance, family relevance, individual relevance for a single user or a single terminal device, service provider relevance, the latter e.g. only if a user/terminal device is entitled to use services of a certain service provider. Said profile data may be used for deciding upon comparison with locally accessible profile data, if a replacement specification that may be represented by a control data block is of relevance for a device receiving the control data block.

The control data block P1i may further comprise time data. Said time data may inter alia comprise a start time, an end time, a repetition time, a number of repetitions, a time interval, a trigger condition for at least one event or any equivalent time or trigger reference information, that is appropriate to limit a replacement specification with respect to time.

The control data block P1i may further comprise identification data. Said identification data may inter alia comprise coordinate information, size information, audio /video detection algorithm reference, start/end event detection parameter data, detection object, detection probability data, detection delay data, detection event duration, detection object class data.

The control data block P1i may further comprise replacement data. Said replacement data may inter alia comprise a replacement mode information e.g. indicating need of total, overlay, constant, frame-wise video replacement and further indicating audio effects as for instance muting, reduced volume, audio signal overlay or substitution. As well said replacement data may comprise orientation information, 3D model information, information on replacement according detection per frame/according time or frame based rules.

The control data block P1i may further comprise adaptation content data. Said adaptation content data may inter alia comprise a reference to the at least one second multimedia content P2, P3, P4, P5, in particular an insertion object name.

The at least one second multimedia content may comprise a multimedia block P2. The multimedia block P2 may comprise amongst other information in particular a type information (type=image) indicating that the packet transports image data. The multimedia block P2 furthermore may comprise object data, e.g. inter alia object type, object class, object coding information, and object code data.

The at least one second multimedia content may comprise a multimedia block P3. The multimedia block P3 may comprise amongst other information in particular a type information (type=audio+video) indicating that the packet transports audio and video data. The multimedia block P3 furthermore may comprise object data, e.g. inter alia object type, object class, object coding information, and object code data.

The at least one second multimedia content may comprise a multimedia block P4. The multimedia block P4 may comprise amongst other information in particular a type information (type=audio) indicating that the packet transports audio data. The multimedia block P4 furthermore may comprise object data, e.g. inter alia object type, object class, object coding information, and object code data.

The at least one second multimedia content may comprise a multimedia block P5. The multimedia block P5 may comprise amongst other information in particular a type information (type=video) indicating that the packet transports video data. The multimedia block P5 furthermore may comprise object data, e.g. inter alia object type, object class, object coding information, and object code data.

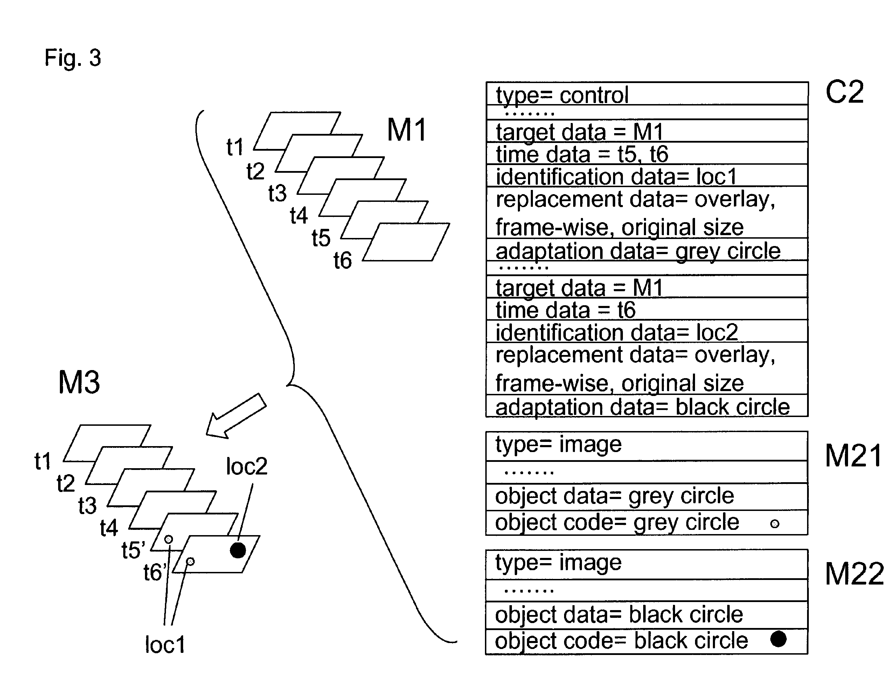

**Fig.3** presents a simplified block diagram of an embodiment for illustration of an adaptation of a frame structured first multimedia content M1. Blocks t1, t2,... t6 of the first multimedia content M1 represent video frames. Control data C2 and at least one second multimedia content M21, M22 are provided over a channel and enable insertion of extra content directly into specific image locations of the first multimedia content. The first multimedia content M1 may be provided over a further channel.

Said at least one second multimedia content M21, M22 represents said extra content depicted by a grey and a black circle. These circles represent extra content that can be text or images to be inserted into the first multimedia content M1. Said control data C2 describe which extra content is to be inserted when and how into said frames of said first multimedia content M1. The control data C2 for example comprise target data indicating that said first multimedia content M1 is to be adapted. The control data C2 for example comprise time data indicating, that a first adaptation addresses blocks t5 and t6 and a second adaptation addresses block t6 of the first multimedia content M1. The control data C2 may comprise identification data indicating a position to insert said extra content according to said first and said second adaptation of the first multimedia content M1. The control data C2 may comprise adaptation data indicating the extra content related to said first adaptation is that depicted as grey circle. The control data C2 may comprise adaptation data indicating the extra content related to said second adaptation is that depicted as black circle. Further the control data C2 may comprise replacement data indicating that frame-wise overlay with original size is to be used for adapting said first multimedia content M1 with respect to said first and second adaptation. More precisely according to the embodiment the extra content represented by the grey circle is to be inserted in blocks t5 and t6 at position coordinates loc1, and the extra content represented by the black circle is to be inserted in block t6 at position coordinates loc2.

Said replacement data may as well comprise fixed or variable size information for an extra content to be inserted. Said variable size information may represent a size changing per frame. Said variable size information may as well represent a size differently changing in x and y coordinates. Said identification data may as well comprise variables specifying properties of image regions where an extra content is to be placed. For example such an image region may be a stationary image region, which e.g. may be stationary at least over a specified time with a certain specified probability. Said identification data may as well comprise a definition of a type of content and said image region may be determined by the fact, that said type of content is to appear in said image region with a given probability. For instance for the purpose of advertising a certain chair an algorithm addressed in said identification data may determine that chairs are found in front of tables with a given probability of 85 percent, thus identifying the place, where to insert the advertisement for said chair. Said replacement data may as well comprise orientation information, 3D information, perspective projecting information each and in any combination specifying in more detail, how said extra content is to be inserted into said first multimedia content M1.

According to the embodiment said control data C2 allow derivation of replacement specifications concerning location loc1 in block t5, location loc1 in block t6, and location loc2 in block t6 of said first multimedia content M1. Replaceable objects are the region of block t5 defined by the extra content represented by the grey circle when shifted to location loc1, the region of block t6 defined by the extra content represented by the grey circle when shifted to location loc1, and the region of block t6 defined by the extra content represented by the black circle when shifted to location loc2. Adapting said blocks t5 and t6 by substitution of the replaceable objects by the extra contents represented by the grey circle and the black circle creates a third multimedia content M3. Blocks t1, t2, t3, t4, t5', t6' represent video frames of said third multimedia content M3. In particular insertion of said extra content in blocks t5' and t6' in locations loc1 and loc2 is illustrated in Fig.3. Blocks t1, t2, t3, t4 of said first and said third multimedia content are identical. Block t5 of said first multimedia content M1 is adapted by transformation to block t5' of said third multimedia content M3. Block t6 of said first multimedia content M1 is adapted by transformation to block t6' of said third multimedia content M3.

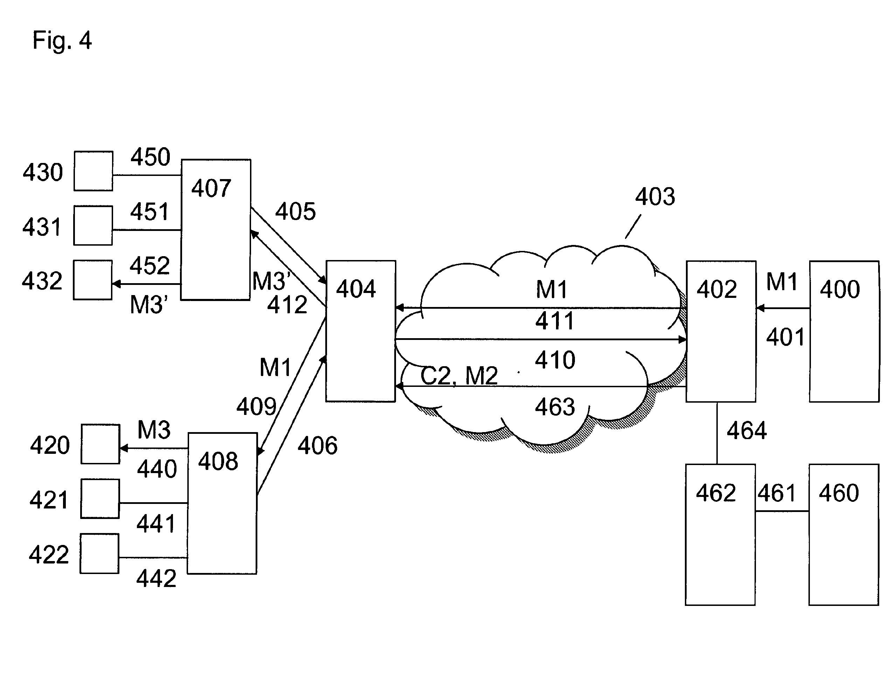

**Fig.4** presents simplified network architecture and data flows for embodiments illustrating creation of third multimedia content M3, M3' by a terminal device 408 and a network device 404.

A TV/audio head end 400 collects channels from different TV/audio service providers and makes them available for access via a network 403. In particular a first multimedia content M1, e.g. received from one of said TV/audio service providers, is provided via a communication relationship 401 to an IGMP multicast router 402 of the network 403. The IGMP multicast router 402 provides the first multimedia content M1 to a network device 404, e.g. in particular a DSLAM, via a communication relationship 411 in response to an IGMP join request message received via a communication relationship 410. Network elements and components of network 403 in the path from the network device 404 to the IGMP router 402 and vice versa, like BRAS, Ethernet switches, further routers, video servers, bridges etc., are not depicted in Fig.4 for simplicity reasons.

A server 460 of an application service provider, in particular for instance an advertiser or content provider, provides control information comprising multimedia data via a communication relationship 461 to an IPTV middleware server 462 providing service to a terminal device 407 and the terminal device 408. Said IPTV middleware server 462 provides control data C2 and at least one second multimedia content M2 via communication relationships 464, 463, and the IGMP router 402 to said network device 404, wherein said control data C2 and said at least one second multimedia content M2 are provided as a channel and correspond to and may be derived from said control information and said multimedia information provided by said server 460. Said network element 404 may temporarily store said control data C2 and said at least one second multimedia content M2. Said temporary storage of said control data C2 may be in original form as received or in form of replacement specifications derived from said control data C2. Temporary storage may be done for availability of relevant replacement specifications, if said terminal device 407 and 408 request access to said first multimedia content M1. Outdated parts of said control data C2 or related replacement specifications that have been temporarily stored may be automatically deleted by said network element 404.

The terminal devices 407 and 408 are IGMP enabled and both may have requested access to the first multimedia content M1. For this purpose said terminal device 407 may send an IGMP join request message via communication relationship 405 to said network element 404. As well the terminal device 408 for the same purpose may send an IGMP join request message via communication relationship 406 to said network element 404.

Said network device 404 evaluates profile information provided within said control data C2 and due to locally stored profile information may determine that said first multimedia content M1 needs adaptation with respect to regionally requested customization for said terminal device 407, which has to be provided by the network device 404 itself. That is why the network device 404 may create a third multimedia content M3' according to at least one respective replacement specification derived from said control data C2, wherein said creating of said third multimedia content M3' is executed on the basis of said at least one second multimedia content M2 and said at least one respective replacement specification. The network device 404 may provide said third multimedia content M3' via communication relationship 412 to said terminal device 407. In addition, said network device 404 may provide modified control data and /or the at least one second multimedia content M2 as channel via communication relationship 412 to said terminal device 407 for possibly necessary subsequent processing.

Said network device 404 also evaluates profile information provided within said control data C2 and due to locally stored profile information may find that said first multimedia content M1 needs no adaptation for said terminal device 408, which has to be provided by the network device 404. That is why the network device 404 may forward the first multimedia content M1 via communication relationship 409 to said terminal device 408. In addition, said network device 404 may provide said control data C2 and said at least one second multimedia content M2 via communication relationship 409 to said terminal device 408 for possibly necessary subsequent processing.

A TV 430 may be connected to said terminal device 407 via a cable connection 450. A phone 431, in particular a video phone, may be connected to said terminal device 407 via a cable connection 451. A PC 432 may be connected to said terminal device 407 via a LAN or WLAN connection 452. Said PC 432 may have requested access to said first multimedia content M1. In response to its request for access to said first multimedia content M1 due to related request of said PC 432 said terminal device 407 receives said third multimedia content M3' possibly together with modified control data and /or the at least one second multimedia content M2 via communication relationship 412. If said terminal device 407 does not receive said modified control data, terminal device 407 outputs said third multimedia content M3' to said PC 432. If said terminal device 407 receives said modified control data, said terminal device analyses said modified control data with respect to relevant replacement specifications to be executed by terminal device 407. For this purpose said terminal device 407 also evaluates profile information provided within said modified control data and due to locally stored profile information may find that said third multimedia content M3' needs no further adaptation by said terminal device 407. That is why the terminal device 407 may in this case also forward said third multimedia content M3' via connection 452 to said PC 432.

A TV 420 may be connected to said terminal device 408 via a cable connection 440. A phone 421, in particular a video phone, may be connected to said terminal device 408 via a cable connection 441. A PC 422 may be connected to said terminal device 408 via a LAN or WLAN connection 442. Said TV 420 or said terminal device 408 may also have requested access to said first multimedia content M1. In response to its request for access to said first multimedia content M1 said terminal device 408 receives said first multimedia content M1 together with said control data C2 and said at least one second multimedia content M2 via communication relationship 409. Said terminal device 408 evaluates profile information provided within said control data C2 and due to locally stored profile information may determine that said first multimedia content M1 needs adaptation with respect to a requested personalization for a user of said terminal device 408. That is why the terminal device 408 may create a third multimedia content M3 according to at least one respective replacement specification derived from said control data C2, wherein said creating of said third multimedia content M3 is executed on the basis of said at least one second multimedia content M2 and said at least one respective replacement specification. The terminal device 408 may provide said third multimedia content M3 via cable connection 440 to said TV 420.

The embodiment illustrates that according to the functionality of said network element 404 and said terminal devices 407, 408 it e.g. is possible for advertisers to add personalized advertisements into high value content as if advertisements were part of said first multimedia content M1 and that it further enables content producers to adapt their content dynamically e.g. to users' tastes, preferences, interests, or e.g. to trends, costumes, interests in certain geographic locations. For this purpose advantageously a communication mechanism is provided to insert extra content, e.g. said at least one second multimedia content M2, on a video stream which is not originally present, such as personalized information, e.g. advertisements, that may be automatically selected according to users' profiles and/or geographic locations. In addition to access to said third multimedia content M3, M3', the user might as well have the option of accessing said first multimedia content M1, which is not adapted according to said control data C2 and said at least one second multimedia content M2.

It is emphasized that the embodiment is not restricted to said IGMP protocol. IGMP has been selected, as it is nowadays the most common multicast protocol, other multicast or unicast protocols or any combination of such protocols are also adequate for the embodiment. In particular said network 403 does not need to support IGMP, said network elements 402, 404 and said terminal devices 407, 408 need not make use of IGMP or multicast. Said terminal devices 407, 408 each may in particular be an STB. With respect to normal operation at start up of an STB, the STB would tune (e.g., IGMP Join request) to an announcements multicast channel, and then to an SW multicast channel to download and run a correct/updated STB SW. After this it would be possible for the users to select new channels or an EPG by making the STB tune/request a new channel (e.g., IGMP Join request) and possibly release (e.g., IGMP leave request) a current channel. Said channel providing said control data C2 may be created by an application service provider or by an IPTV service operator and may contain either static images of content, short streams of content, or even text, together with said control data C2. Said channel may be broadcasted if adaptations of said first multimedia content M1 are to reach all end-users. Said channel may be multicasted, if adaptations of said first multimedia content M1 are to reach a subset of users, such as a community or a set of users with same viewing habits or shopping patterns, wherein in this case only this subset of users will have access to said third multimedia content M3, M3'. Said channel may be unicasted, if extra content, in particular said at least one second multimedia content M2, is used for personalization according to a single user's profile, e.g. relating to such matters as buying habits, zapping profile, internet navigation, bookmarked information by the single user, viewing habits, service subscription, etc.. Said channel may be expected to have much limited bandwidth when compared with a further channel providing e.g. said first multimedia content M1, since only said extra content to be inserted together with said control data C2 specifying how to insert said extra content, needs to be transmitted. The information transmitted by said channel may be produced by a specialized or dedicated company, an interest group, an individual, an advertiser, a brand company, or an arbitrary collection of these or other companies providing multimedia content. Said channel may be provided continuously, periodically or at specific time instants. Said first multimedia content M1 may be provided via said further channel. Said channel and said further channel may be or may not be synchronized. If synchronized, then both a frame i from the further channel a frame ii from the said channel, related to adaptation of frame i according to said control data C2 arrive at the same time. An alternative is to provide a time instant ti to associate said frame ii to the corresponding frame i, wherein said time instant ti may be provided within said control data C2 that may be frame-wise structured. Regardless synchronization of said channel and said further channel, if said channel is sent continuously, then during buffering of said further channel the frame i can be mapped to frame ii. If sent periodically, then such pairing only occurs at specific time intervals in time and can be solved via buffering of said further channel. For instance, from 5 to 5 minutes, an insertion of advertisements on stationary regions of an image may occur. If sent at specific time instants, then such pairing only occurs at these time instants. For the latter an example may be a random insertion of advertisements in stationary regions of the image or in probable locations, such as a given automobile advertisement whenever a road appears within said first multimedia content M1. Apart from currently known channels like video/audio channels, of which possibly more than one may be received simultaneously, announcements channels controlling channel periodically sent, SW version announcement channel sent on start up request, and EPG channel sent on request, it may be advantageous with respect to implementation to have one additional type of channel defined and available for said channel.

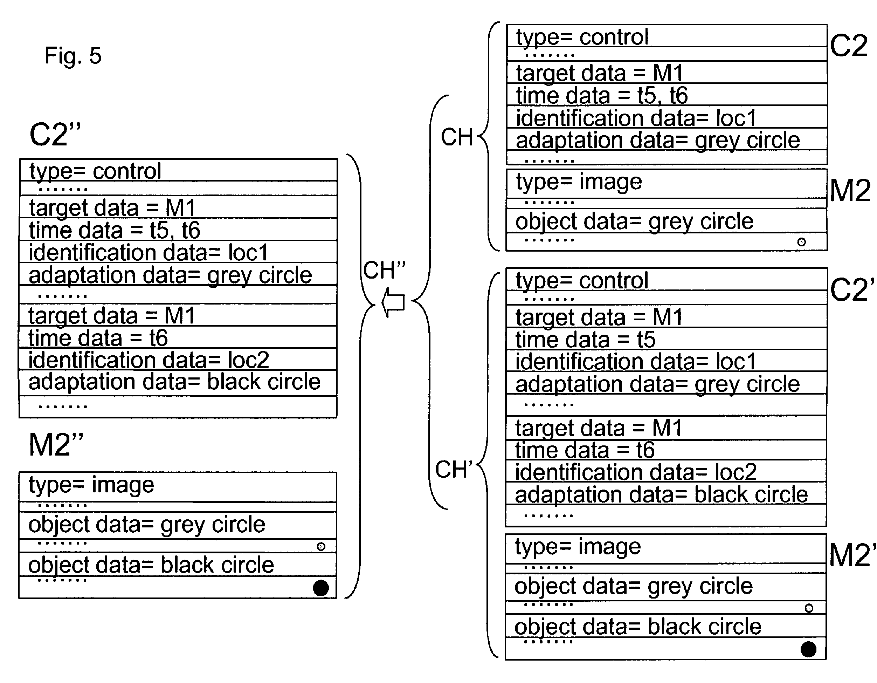

**Fig.5** presents simplified data formats of an embodiment for illustration of aggregation of control data provided over different channels. Control data C2 and at least one second multimedia content M2 are provided over a first channel CH. Further control data C2' and at least one further second multimedia data M2' are provided via a second channel CH'. Said first channel CH and said second channel CH' may be provided over a network and terminated by a network device or a terminal device, which aggregates information received via said first channel CH and said second channel CH' for provisioning as a third channel CH " over said network.

Said at least one second multimedia content M2 represents an extra content depicted by a grey circle. Said at least one further second multimedia content M2' represents an extra content depicted by the grey and a black circle. These circles represent extra content that can be text or images which could be inserted into a first multimedia content M1.

Said control data C2 describe which extra content is to be inserted when and how into frames t5 and t6 of said first multimedia content M1. The control data C2 for example comprise target data indicating that said first multimedia content M1 is to be adapted. The control data C2 for example comprise time data indicating, that a first adaptation addresses frame t5 and t6 of the first multimedia content M1. The control data C2 may comprise identification data indicating a first position loc1 where to insert said extra content according to said first adaptation of the first multimedia content M1. The control data C2 may comprise adaptation data indicating the extra content related to said first adaptation is that depicted as grey circle. The control data C2 may comprise further data, in particular replacement data, not depicted in Fig.5.

Said further control data C2' describe which further extra content is to be inserted when and how into frames t5, t6 of said first multimedia content M1. The further control data C2' for example comprise target data indicating that said first multimedia content M1 is to be adapted. The further control data C2' for example comprise time data indicating, that a second adaptation addresses frame t5 and a third adaptation addresses frame t6 of the first multimedia content M1. The further control data C2' may comprise identification data indicating said first position loc1 and a second position loc2 where to insert said further extra content according to said second adaptation and said third adaptation of the first multimedia content M1. The further control data C2' may comprise adaptation data indicating the further extra content related to said second adaptation is that depicted as grey circle. The further control data C2' may comprise adaptation data indicating the further extra content related to said third adaptation is that depicted as black circle. The further control data C2' may comprise further data, in particular replacement data, not depicted in Fig.5.

According to said control data C2 frames t5 and t6 of said first multimedia content M1 are to be adapted at location loc1 with respect to said extra content depicted as grey circle. According to said further control data C2' frame t5 of said first multimedia content M1 is to be adapted at location loc1 with respect to said further extra content depicted as grey circle and frame t6 of said first multimedia content M1 is to be adapted at location loc2 with respect to said further extra content depicted as black circle. Assuming that said extra content depicted as grey circle is identical to said further extra content depicted as grey circle aggregation of said first and said second channel removes redundant control and second multimedia data.

For said third channel CH " it is sufficient to provide at least one aggregated second multimedia content M2" , which is identical to said at least one further second multimedia content M2'.

Furthermore, aggregated control data C2" may be provided over said third channel CH " , which are composed out of said control data C2 and said further control data C2'. Said aggregated control data C2" describe which of said extra content or said further extra content is to be inserted when and how into frames t5, t6 of said first multimedia content M1. The aggregated control data C2" for example comprise target data indicating that said first multimedia content M1 is to be adapted. The aggregated control data C2" for example comprise time data indicating, that a fourth adaptation of said first multimedia content M1 addresses frames t5, t6 and a fifth adaptation addresses frame t6 of the first multimedia content M1. The aggregated control data C2" may comprise identification data indicating said first position loc1 and said second position loc2 where to insert said further extra content according to said fourth adaptation and said fifth adaptation of the first multimedia content M1. The aggregated control data C2" may comprise adaptation data indicating the further extra content related to said fourth adaptation is that depicted as grey circle. The aggregated control data C2" may comprise adaptation data indicating the further extra content related to said fifth adaptation is that depicted as black circle. The aggregated control data C2" may comprise further data, in particular replacement data, not depicted in Fig.5.

Also a plurality of said channels may exist, wherein each channel provides control data and at least one multimedia content that may be specific for said channel of said plurality of said channels. Said plurality may also be of relevance for a single network device or terminal device accessing said first multimedia content M1. Each channel of said plurality of said channels may transmit reference location and size information for e.g. advertisements or personalized content with respect to a further channel providing said first multimedia content M1. Each channel of said plurality of said channels may be assigned to an advertiser, who is inserting content at different parts and/or different timings in comparison to another channel of said plurality of said channels assigned to a different advertiser. In particular for efficiency reasons and optimization of resource usages, all channels of said plurality of said channels may be collapsed into a single equivalent channel to be provided to a single network or a terminal device. Each channel of said plurality of said channels can be specific to certain subjects or a geographic location. For instance, a popular movie might show advertisements for a first shoe brand in a first country and for a second shoe brand in a second country. One aggregated channel can aggregate together control data and multimedia data of said plurality of said channels, wherein said control data may comprise target data allowing determination of relevance of a part of said control data for a single user or a single terminal device of a user. Thus an aggregated channel may transport and again provide all control data and multimedia data relevant for a single user or a user's terminal device as if no aggregation would have been executed. If different application service providers, in particular advertisers, address the same replaceable object of said first multimedia content M1, rules, in particular personalized rules, e.g. priority based rules, may be defined, that are able to prevent said replaceable object of being adapted inconsistently due to execution of more than one replacement specification. As well the adaptation of said first multimedia content M1 is not limited to said further channel. Said control data may as well comprise information to include adaptation of said first multimedia content M1, when provided over a number of different channels. If for example said multimedia content M1 is provided at a first time over channel x and at a second time over channel y, said control data may comprise said channel and time information as to cover adaptation of said first multimedia content M1, when provided over said channel x and when provided over said channel y.

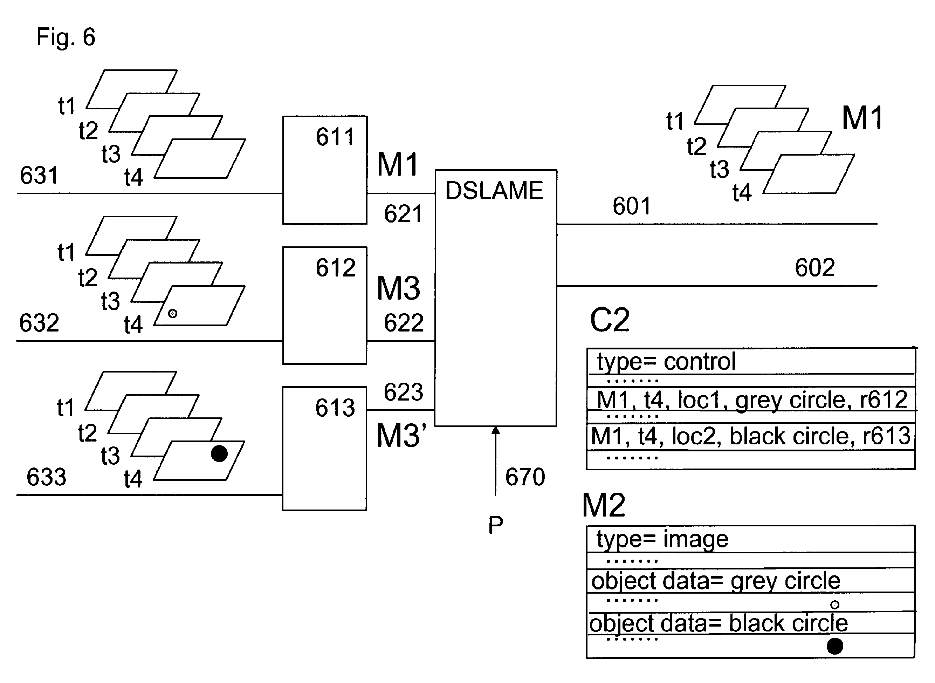

**Fig.6** presents a simplified block diagram of embodiments for illustration of individual adaptation of a frame structured first multimedia content M1. Blocks t1, t2,... t4 of said first multimedia content M1 represent video frames. Control data C2 and at least one second multimedia content M2 are provided over a channel using communication relationship 602 and enable insertion of extra content directly into specific image locations of the first multimedia content M1. The first multimedia content M1 may be provided over a further channel using communication relationship 601. Said channel and said further channel are provided to a network device DSLAME, which may in particular be a DSLAM.

A first terminal device 611 may be connected via communication relationship 621 to said network device DSLAME. A second terminal device 612 may be connected via communication relationship 622 to said network device DSLAME. A third terminal device 613 may be connected via communication relationship 623 to said network device DSLAME. Said communication relationships may be cable and message based, in particular for instance based on DSL access lines. Said terminal device 611 is connected to a first TV (not depicted) via cable 631. Said terminal device 612 is connected to a second TV (not depicted) via cable 632. Said terminal device 613 is connected to a third TV (not depicted) via cable 633. Said terminal devices 611, 612, 613 each may have requested access to said further channel and said first multimedia content M1 respectively.

Said network device DSLAME on the base of locally available and/or stored profile information P, which may be provided by a network operator via a communication relationship 670, evaluates said control data C2. Said network device DSLAME evaluates profile information provided within said control data C2 and due to said locally available and/or stored profile information P may determine that said first multimedia content M1 needs adaptation with respect to personalization for each of said terminal devices 611, 612, 613, which has to be provided by said network device DSLAME itself.

Said control data C2 comprise target data indicating said first multimedia content M1, time data indicating said block t4, identification data given by positions loc1 and loc2, and adaptation content data relating to a multimedia content represented by a grey circle and a multimedia content represented by a black circle, which both are comprised in said at least one second multimedia content M2 and by that available to said network device DSLAME. For the purpose of disaggregation said control data C2 comprise a first reference data r612, allowing detection of necessity of creation of a third multimedia content M3 for said terminal device 612, characterized by adaptation of said block t4 with an extra content represented by said grey circle in position loc1. Analogously said control data C2 comprise a second reference data r613, allowing detection of necessity of creation of a further third multimedia content M3' for said terminal device 613, characterized by adaptation of said block t4 with an extra content represented by said black circle in position loc2. According to replacement specifications inter alia determined on the basis of said control data C2 said first multimedia content M1 is provided to terminal device 611, said third multimedia content M3 is provided to terminal device 612, said further third multimedia content M3'is provided to terminal device 613. Said terminal devices 611, 612, 613 may forward said first multimedia content M1, said third multimedia content M3, and said further third multimedia content M3' respectively to said TVs connected via cables 631, 632 and 633. Said forwarding may be frame structured and transparently without changes, said forwarding may also be after decompression, decoding, decryption or adaptations due to the characteristics of the connection to said TVs, as A/V adaptation or HDMI adaptation. Fig.6 shows the multimedia content forwarded via each of said cables 631, 632, 633 according to a frame structured illustration.

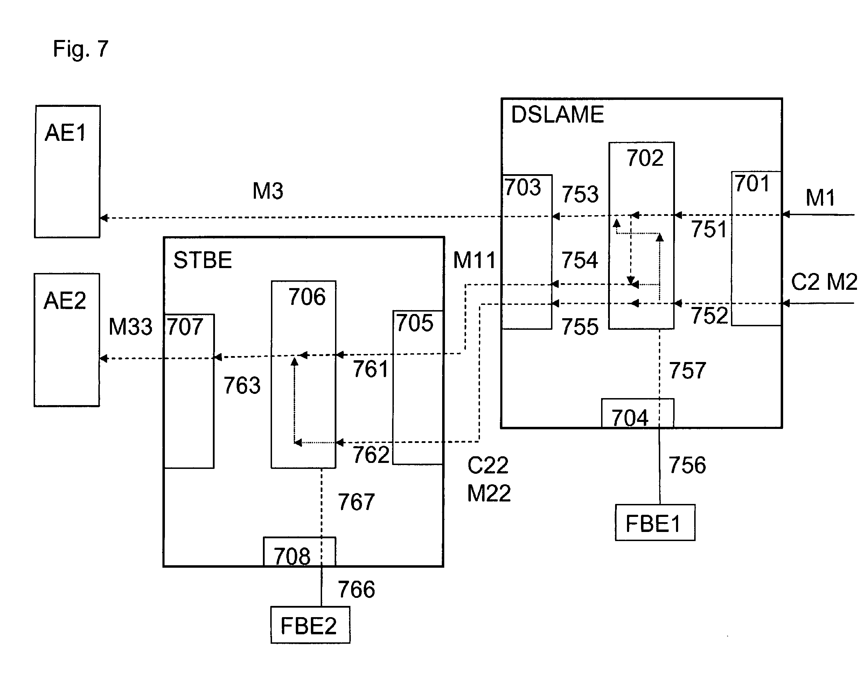

**Fig.7** presents a simplified block diagram of an embodiment for illustration of an apparatus for adaptation of a first multimedia content M1.

A first apparatus DSLAME may receive the first multimedia content M1, it may also receive control data C2 and at least one second multimedia content M2. Said control data C2 and said at least one second multimedia content M2 are provided over a channel over a network, in particular for example a multicast channel in a communication network. Receipt of said first multimedia content M1 may for instance be over a further channel over said network or over another network or by delivery over amass storage devices, e.g. a CD, a DVD, blu-ray disk, a USB memory device or any other versatile storage device. Delivery and receipt of said first multimedia content M1, said control data C2, and said at least one second multimedia content M2 may be due to a preceding user's or network operator's request.

Said first apparatus DSLAME inter alia may have a receiving unit 701, a processing unit 702, a provisioning unit 703, and a control interface unit 704. Said receiving unit 701 may receive said first multimedia content M1 and may provide it via an internal communication relationship 751, in particular a message or frame based connection to said processing unit 702. Said receiving unit 701 may provide said first multimedia content M1 transparently to said processing unit 702, or it may preprocess said first multimedia content M1 according to the needs of said processing unit 702 or the needs of said internal communication relationship 751, in particular said receiving unit 701 may decompress, decode, and/or decrypt said first multimedia content M1. Said receiving unit 701 may receive said control data C2 and said at least one second multimedia content M2 and may provide them via an internal communication relationship 752, in particular a message or frame based connection to said processing unit 702. Said receiving unit 701 may further provide said control data C2 and/or said at least one second multimedia content M2 transparently to said processing unit 702, or it may preprocess said control data C2 and/or said at least one second multimedia content M2 according to the needs of said processing unit 702 or the needs of said internal communication relationship 752, in particular said receiving unit 701 may decompress, decode, and/or decrypt said control data C2 and/or said at least one second multimedia content M2.

Said first apparatus DSLAME may be connected to a first control device FBE1 via communication relationship 756. Said first control device FBE1 may be a remote control device communicating with said first apparatus DSLAME via an IR connection, a radio frequency link, a local cable connection or network connection. Said first control device FBE1 may be used for control of said first apparatus DSLAME by a user or by a network operator. In particular said first apparatus DSLAME may be an STB, in which case said first control device FBE1 may be a remote control device for control of the STB. As well said first apparatus DSLAME may be a DSLAM, in which case the first control device FBE1 may be a remote server or a locally connected PC of a network operator. In particular said first apparatus DSLAME may receive control commands/signals and/or a first profile information via said communication relationship 756. Said control commands/signals and/or a said first profile information may be received by said control interface unit 704 and forwarded to said processing unit 702 via an internal communication relationship 757.

Said processing unit 702 may determine at least one first replacement specification on the basis of said control data C2 and said first profile information, said processing unit 702 may identify at least one first replaceable object in said first multimedia content M1 according to said at least one first replacement specification, and said processing unit 702 may create a third multimedia content M3 by adapting said at least one first replaceable object in said first multimedia content M1 on the basis of said at least one second multimedia content M2 and said at least one first replacement specification. Said processing unit 702 may provide said third multimedia content M3 to said provisioning unit 703 via an internal communication relationship 753. Said provisioning unit 703 may provide said third multimedia content M3 according to said first profile information to a first output device AE1. Said third multimedia content M3 may for instance be specific for a user of said first output device AE1 or specific to a geographical region due to evaluation of said control data C2 on the basis of said first profile information. In particular said provisioning unit 703 according to said first profile information may or may not compress, code, and/or encrypt said third multimedia content M3 according to said first profile information which may be accessible by said provisioning unit 703 via said processing unit 702 and which may reflect the needs of said first output device AE1 with respect to compression, coding and/or encryption.

Said processing unit 702 may determine at least one second replacement specification on the basis of said control data C2 and said first profile information, said processing unit 702 may identify at least one second replaceable object in said first multimedia content M1 according to said at least one second replacement specification, and said processing unit 702 may create a further third multimedia content M11 by adapting said at least one second replaceable object in said first multimedia content M1 on the basis of said at least one second multimedia content M2 and said at least one second replacement specification. Said processing unit 702 may provide said further third multimedia content M11 to said provisioning unit 703 via an internal communication relationship 754. Said provisioning unit 703 may provide said further third multimedia content M11 according to said first profile information to a second apparatus STBE. Said further third multimedia content M11 may for instance be specific for said second apparatus STBE / a user of said second apparatus STBE or specific to a geographical region due to evaluation of said control data C2 on the basis of said first profile information.

In case said processing unit 702 may not determine said at least one second replacement specification on the basis of said control data C2 and said first profile information, said further third multimedia content M11 may be defined identical to said first multimedia content M1, i.e. in this case said processing unit 702 may transfer said first multimedia content M1 transparently to said provisioning unit 703 via said internal communication relationship 754.

In particular said provisioning unit according to said first profile information may or may not compress, code, and/or encrypt said further third multimedia content M11 according to said first profile information which may be accessible by said provisioning unit 703 via said processing unit 702 and which may reflect the needs of said second apparatus STBE with respect to compression, coding and/or encryption.

Said processing unit 702 may as well filter said channel according to said first profile information by deletion of parts of said control data C2 and/or by deletion of at least one of said at least one second multimedia content M2. Said processing unit 702 may provide filtered control data C22 and filtered at least one second multimedia content M22 to said provisioning unit 703 via an internal communication relationship 755. Said provisioning unit 703 may provide said filtered control data C22 and said filtered at least one second multimedia content M22 according to said first profile information to a second apparatus STBE. Advantageously said processing unit 702 may delete parts of said control data C2 that are exclusively related to at least one of said at least one second replacement specification. Furthermore, advantageously said processing unit 702 may delete at least one of said at least one second multimedia content M2 that is exclusively related to at least one of said at least one second replacement specification. Thus parts of said control data C2 and said at least one second multimedia content M2 that have already been used for adaptation of said first multimedia content M1 and are not relevant for any subsequent adaptations can be removed and need not be transmitted to subsequent network and/or terminal devices, thus reducing bandwidth and performance requirements for transmission of said filtered control data C22 and said filtered at least one second multimedia content M22.

In particular said provisioning unit 703 may provide said filtered control data C22 and said filtered at least one second multimedia content M22 as a filtered channel to said second apparatus STBE e.g. over a communication network, in particular the internet, an operator's network, an IPTV network, or a home network. Furthermore, said provisioning unit 703 may provide said further third multimedia content M11 as another channel to said second apparatus STBE.

Said second apparatus STBE may receive said further third multimedia content M11, it may also receive said filtered control data C22 and said filtered at least one second multimedia content M22. Said filtered control data C22 and said filtered at least one second multimedia content M22 may be provided over said filtered channel over a network, in particular for example a multicast channel in a communication network. Receipt of said further third multimedia content M11 may for instance be over said another channel over said network. Delivery and receipt of said further third multimedia content M11, said filtered control data C22, and said filtered at least one second multimedia content M22 may be due to a preceding user's or network operator's request.

Said second apparatus STBE inter alia may have a receiving unit 705, a processing unit 706, a provisioning unit 707, and a control interface unit 708. Said receiving unit 705 may receive said further third multimedia content M11 and may provide it via an internal communication relationship 761, in particular a message or frame based connection to said processing unit 706. Said receiving unit 705 may provide said further third multimedia content M11 transparently to said processing unit 706, or it may preprocess said further third multimedia content M11 according to the needs of said processing unit 706 or the needs of said internal communication relationship 761, in particular said receiving unit 705 may decompress, decode, and/or decrypt said further third multimedia content M11. Said receiving unit 705 may receive said filtered control data C22 and said filtered at least one second multimedia content M22 and may provide them via an internal communication relationship 762, in particular a message or frame based connection to said processing unit 706. Said receiving unit 705 may further provide said filtered control data C22 and/or said filtered at least one second multimedia content M22 transparently to said processing unit 706, or it may preprocess said filtered control data C22 and/or said filtered at least one second multimedia content M22 according to the needs of said processing unit 706 or the needs of said internal communication relationship 762, in particular said receiving unit 705 may decompress, decode, and/or decrypt said filtered control data C22 and/or said filtered at least one second multimedia content M22.

Said second apparatus STBE may be connected to a second control device FBE2 via communication relationship 766. Said second control device FBE2 may be a remote control device communicating with said second apparatus STBE via an IR connection, a radio frequency link, a local cable connection or network connection. Said second control device FBE2 may be used for control of said second apparatus STBE by a user. In particular said second apparatus STBE may be a further STB, in which case said second control device FBE2 may be a remote control device for control of said further STB. In particular said second apparatus STBE may receive control commands/signals and/or a second profile information via said communication relationship 766. Said control commands/signals and/or said second profile information may be received by said control interface unit 708 and forwarded to said processing unit 706 via an internal communication relationship 767.

Said processing unit 706 may determine at least one third replacement specification on the basis of said filtered control data C22 and said second profile information, said processing unit 706 may identify at least one third replaceable object in said further third multimedia content M11 according to said at least one third replacement specification, and said processing unit 706 may create another third multimedia content M33 by adapting said at least one third replaceable object in said further third multimedia content M11 on the basis of said filtered at least one second multimedia content M22 and said at least one third replacement specification. Said processing unit 706 may provide said another third multimedia content M33 to said provisioning unit 707 via an internal communication relationship 763. Said provisioning unit 707 may provide said another third multimedia content M33 according to said second profile information to a second output device AE2. Said another third multimedia content M33 may for instance be specific for a user of said second output device AE2 or specific to a geographical region due to evaluation of said filtered control data C22 on the basis of said second profile information. In particular said provisioning unit 707 according to said second profile information may or may not compress, code, and/or encrypt said another third multimedia content M33 according to said second profile information which may be accessible by said provisioning unit 707 via said processing unit 706 and which may reflect the needs of said second output device AE2 with respect to compression, coding and/or encryption.

Further embodiments illustrate how extra content may be inserted into said first multimedia content. Such insertion can vary from simple overlaying of an image at a specific image location to more complex models of insertion, ranging from considering extra content orientation, size, as well as more complex formats of extra content (e.g. text and image). The control data may as well not refer explicitly to image coordinates, but instead to stationary image regions, or even to place extra content in places where this type of content is probable to occur in nature.

In case of a-priori information within said control data extra content information as well as control data related to how to insert such extra content may be provided à-priori by an advertiser or a content provider. The extra content may refer to said first multimedia content M1 or the extra content may be generic and apply to many TV channels. Related control data may be transmitted, for instance, from the IPTV middleware solution using the information obtained from the content provider. Said third multimedia content may then be created at a DSLAM, but alternatively this could be done as well at a TV head end or at an STB. A video with an actor, who is moving around, may be transmitted on a broadcast channel selected by the IPTV user. Within said control data an advertiser may define at specific frames and during a certain time interval, advertisements that at each instant and for each frame are to be located at a given location, with a given size, and in accordance with a given appearance as provided by said at least one second multimedia content. These definitions may be made according to the geographic location of the end-user, or else the end-user personal tastes, or else according to consuming end-user behaviors as tracked by the operator and used to personalize information of the end-user. For instance, the advertiser might select to advertise a given brand at specific locations for that end-user that may vary for other end-users. Said extra content may be personalized for instance from a singles user's profile, such as buying habits, zapping profile, internet navigation or buying profile, bookmarked information by the user, user's viewing habits, user's service subscription, etc..

As well stationary places on the video stream may be selected in order to replace for example the original background by an advertisement. For this an algorithm to detect stationary pixels on an image may be used to detect regions in the image that do not move above a threshold within a specific period of time. An original video with an actor, who is moving around, but with some static scenery on the background at certain frames, which remain static for a certain time interval, may be transmitted on a broadcast channel selected by an IPTV end-user. An advertiser may define an advertisement that may be intended to be added to the movie during a time interval T. At a DSLAM or at an STB, an algorithm may detect stationary portions of the incoming movie images with duration of T1. If T1 is greater than T, then another algorithm may project the image defining the advertisement into the stationary portion of the image during time interval T. This can be done for live broadcast, requiring some buffering capability with an associated delay at the processing element to allow the stationary detection of image regions and adding the advertisement to such regions. Such processing can also be done at the source, and then incorporating the location of the stationary region on the control data as for the previous embodiment.

Objects do not appear arbitrarily in nature. There are natural places where to find them. This may be exploited in another embodiment according to which advertisements may be placed in not pre-defined places. For instance, a car advertiser may want to add an image of a car on a video stream, without specifying its location or size. An algorithm may then process some features of the image, and based on training data, may learn off-line probable places where to place cars (and their corresponding size on the image) as well as other objects according to the advertiser goals. Said algorithm may use statistical tools such as Bayesian Learning, and based on training data, may learn (off-line) probable places where to place a watch and a ring and their corresponding size on an image. Thus one may expect to find rings on fingers and watches on the hand, with an appropriate size. In this case said control data may comprise in particular an object model - 3D structure and image rendering of the ring, special code indicating that the way the extra content is to be inserted is through natural occuring places - said algorithm may then determine automatically the location, size and orientation for placing the object according to its projection into said video, thus creating said third multimedia content.

With future versions of MPEG-4, the images on a video will become decomposed as tagged objects, thus enabling easier and cheaper implementation, since images will already be decomposed into objects, allowing cheaper embodiments on base of home hardware.

### Abbreviations

- A/V: Audio/Video
- BRAS: Broadband Access Server
- CD: Compact Disc
- DSL: Digital Subscriber Line
- DSLAM: Digital Subscriber Line Access Multiplexer
- DTV: Digital Television
- DVB: Digital Video Broadcasting
- DVB-C: Digital Video Broadcasting Cable
- DVB-S: Digital Video Broadcasting Satellite
- DVB-T: Digital Video Broadcasting Terrestrial
- DVD: Digital Versatile Disc
- EPG: Electronic Program Guide
- ESG: Electronic Service Guide
- FEC: Forward Error Correction
- HD: High Definition
- HDMI: High Definition Multimedia Interface
- HDTV: High Definition Television
- HTML: Hypertext Markup Language
- IGMP: Internet Group Management Protocol
- IP: Internet Protocol
- IPTV: Internet Protocol Television
- IR: Infra-red
- LAN: Local Area Network
- MP3: MPEG-1 Audio Layer 3
- MPEG: Moving Picture Experts Group
- PC: Personal Computer
- PCM: Pulse Code Modulation
- PDA: Personal Digital Assistent
- QoS: Quality of Service
- PVR: Personal Video Recorder
- SD: Standard Definition
- SDH: Synchronous Digital Hierarchy
- SDTV: Standard Definition Television
- SMS: Short Message Service
- STB: Set Top Box
- SW: Software

- TV: Television, Fernsehen, Fernsehgerät
- URL: Uniform Resource Locator
- USB: Universal Serial Bus
- VoD: Video on Demand
- WLAN: Wireless Local Area Network

## Claims

1. A method for adaptation of a first multimedia content (M1, M11) comprising:
- receiving (101) said first multimedia content (M1, M11);
- receiving control data (C2, C22) and at least one second multimedia content (M2, M22), wherein said control data (C2, C22) are streamed over a channel (102);
- determining at least one replacement specification on the basis of said control data (C2, C22) and a profile information (103);
- identifying at least one replaceable object in said first multimedia content (M1, M11) according to said at least one replacement specification (104);
- creating a third multimedia content (M11, M3, M33) by adapting said at least one replaceable object in said first multimedia content (M1, M11) on the basis of said at least one second multimedia content (M2, M22) and said at least one replacement specification (105);
- providing said third multimedia content (M11, M3, M33) according to said profile information (106);
- wherein said at least one second multimedia content (M2, M22) is streamed over said channel;
- receiving additional control data streamed over an additional channel;
- aggregating said control data (C2, C22), said additional control data, and said at least one second multimedia content (M2, M22) into an aggregated channel;
- providing said aggregated channel according to said profile information.

2. The method according to claim 1, comprising:
- filtering said channel according to said profile information by deletion of parts of said control data (C2, C22) and/or by deletion of at least one of said at least one second multimedia content (M2, M22), and
- providing said filtered channel according to said profile information.

3. The method according to any of the preceding claims comprising:
- decoding and/or decompressing (113) said first multimedia content (M1, M11) and/or said at least one second multimedia content (M2, M22).

4. The method according to any of the preceding claims comprising:
- compressing and/or coding of said third multimedia content (M11, M3, M33) in dependency of said profile information (116).

5. The method according to any of the preceding claims, wherein said first multimedia content (M1, M11) is streamed over a further channel.

6. The method according to any of the preceding claims,
- wherein said control data (C2, C22) include a first reference to said first multimedia content (M1, M11) and/or a set of channel references and
- wherein said control data (C2, C22) include a second reference to said at least one second multimedia content (M2, M22).

7. The method according to any of the preceding claims, wherein said at least one second multimedia content (M2, M22) comprises object name information and object attribute information.

8. The method according to any of the preceding claims,
- wherein said replacement specification comprises a frame-wise video and/or audio recognition for said identification of said at least one replaceable object,
- said replacement specification comprises a frame-wise adaptation for said adapting of said at least one replaceable object.

9. The method according to any of the preceding claims, wherein said replacement specification comprises evaluation of MPEG-4 tagging information for said identification of said at least one replaceable object.

10. An apparatus for adaptation of a first multimedia content (M1, M11) comprising:
- a receiving unit (701, 705)
receiving said first multimedia content (M1, M11), control data (C2, C22) and at least one second multimedia content (M2, M22), wherein said control data (C2, C22) are streamed over a channel;
- a processing unit (702, 706)
determining at least one replacement specification on the basis of said control data (C2, C22) and a profile information, identifying at least one replaceable object in said first multimedia content (M1, M11) according to said at least one replacement specification, and
creating a third multimedia content (M11, M3, M33) by adapting said at least one replaceable object in said first multimedia content (M1, M11) on the basis of said at least one second multimedia content (M2, M22) and said at least one replacement specification; and
- a provisioning unit (703, 707)
providing said third multimedia content (M11, M3, M33) according to said profile information;
- wherein said at least one second multimedia content (M2, M22) is streamed over said channel,
- wherein said receiving unit (701, 705) receives additional control data streamed over an additional channel,
- wherein said processing unit (702, 706) aggregates said control data (C2, C22), said additional control data, and said at least one second multimedia content (M2, M22) into an aggregated channel,
- wherein said provisioning unit (703, 707) provides said aggregated channel according to said profile information.

11. The apparatus according to claim 10, wherein said provisioning unit (703, 707) compresses and/or codes the third multimedia content (M11, M3, M33) in dependency of said profile information.

12. The apparatus according to any of claims 10 or 11,
- wherein said at least one second multimedia content (M2, M22) is streamed over said channel,
- wherein said processing unit (702, 706) filters said channel according to said profile information by deletion of parts of said control data (C2, C22) and/or by deletion of at least one of said at least one second multimedia content (M2, M22), and
- wherein said provisioning unit (703, 707) provides said filtered channel according to said profile information.

## Patentansprüche

1. Verfahren zum Anpassen eines ersten Multimediainhalts (M1, M11), das Folgendes umfasst:
- Empfangen (101) des ersten Multimediainhalts (M1, M11);
- Empfangen von Steuerdaten (C2, C22) und mindestens eines zweiten Multimediainhalts (M2, M22), wobei die Steuerdaten (C2, C22) über einen Kanal (102) per Streaming übertragen werden;
- Bestimmen mindestens einer Ersatzspezifikation aufgrund der Steuerdaten (C2, C22) und von Profilinformationen (103);
- Identifizieren mindestens eines ersetzbaren Objektes in dem ersten Multimediainhalt (M1, M11) gemäß der mindestens einen Ersatzspezifikation (104);
- Erzeugen eines dritten Multimediainhalts (M11, M3, M33) durch Anpassen des mindestens einen ersetzbaren Objektes in dem ersten Multimediainhalt (M1, M11) aufgrund des mindestens einen zweiten Multimediainhalts (M2, M22) und der mindestens einen Ersatzspezifikation (105);
- Bereitstellen des dritten Multimediainhalts (M11, M3, M33) gemäß den Profilinformationen (106);
- wobei der mindestens eine zweite Multimediainhalt (M2, M22) über den Kanal per Streaming übertragen wird;
- Empfangen von zusätzlichen Steuerdaten, die über einen zusätzlichen Kanal per Streaming übertragen werden;
- Vereinigen der Steuerdaten (C2, C22), der zusätzlichen Steuerdaten und des mindestens einen zweiten Multimediainhalts (M2, M22) in einen vereinigten Kanal;
- Bereitstellen des vereinigten Kanals gemäß den Profilinformationen.

2. Verfahren nach Anspruch 1, das Folgendes umfasst:
- Filtern des Kanals gemäß den Profilinformationen durch Löschen von Teilen der Steuerdaten (C2, C22) und/oder durch Löschen von mindestens einem des mindestens einen zweiten Multimediainhalts (M2, M22) und
- Bereitstellen des gefilterten Kanals gemäß den Profilinformationen.

3. Verfahren nach einem der vorhergehenden Ansprüche, das Folgendes umfasst:
- Decodieren und/oder Dekomprimieren (113) des ersten Multimediainhalts (M1, M11) und/oder des mindestens einen zweiten Multimediainhalts (M2, M22).

4. Verfahren nach einem der vorhergehenden Ansprüche, das Folgendes umfasst:
- Komprimieren und/oder Codieren des dritten Multimediainhalts (M11, M3, M33) in Abhängigkeit von den Profilinformationen (116).

5. Verfahren nach einem der vorhergehenden Ansprüche, wobei der erste Multimediainhalt (M1, M11) über einen weiteren Kanal per Streaming übertragen wird.

6. Verfahren nach einem der vorhergehenden Ansprüche,
- wobei die Steuerdaten (C2, C22) eine erste Referenz auf den ersten Multimediainhalt (M1, M11) und/oder eine Gruppe von Kanalreferenzen enthalten und
- wobei die Steuerdaten (C2, C22) eine zweite Referenz auf den mindestens einen zweiten Multimediainhalt (M2, M22) enthalten.

7. Verfahren nach einem der vorhergehenden Ansprüche, wobei der mindestens eine zweite Multimediainhalt (M2, M22) Objektnamensinformationen und Objektattributinformationen enthält.

8. Verfahren nach einem der vorhergehenden Ansprüche,
- wobei die Ersatzspezifikation eine rahmenweise Video- und/oder Audioerkennung für die Identifikation des mindestens einen ersetzbaren Objektes umfasst,
- wobei die Ersatzspezifikation eine rahmenweise Anpassung für das Anpassen des mindestens einen ersetzbaren Objektes umfasst.

9. Verfahren nach einem der vorhergehenden Ansprüche, wobei die Ersatzspezifikation eine Beurteilung von MPEG-4-Markierungsinformationen für die Identifikation des mindestens einen ersetzbaren Objektes umfasst.

10. Vorrichtung für die Anpassung eines ersten Multimediainhalts (M1, M11), die Folgendes umfasst:
- eine Empfangseinheit (701, 705), die den ersten Multimediainhalt (M1, M11), Steuerdaten (C2, C22) und mindestens einen zweiten Multimediainhalt (M2, M22) empfängt, wobei die Steuerdaten (C2, C22) über einen Kanal per Streaming übertragen werden;
- eine Verarbeitungseinheit (702, 706), die mindestens eine Ersatzspezifikation aufgrund der Steuerdaten (C2, C22) und von Profilinformationen bestimmt, mindestens ein ersetzbares Objekt in dem ersten Multimediainhalt (M1, M11) gemäß der mindestens einen Ersatzspezifikation identifiziert und
einen dritten Multimediainhalt (M11, M3, M33) durch Anpassen des mindestens einen ersetzbaren Objektes in dem ersten Multimediainhalt (M1, M11) aufgrund des mindestens einen zweiten Multimediainhalts (M2, M22) und der mindestens einen Ersatzspezifikation erzeugt; und
- eine Bereitstellungseinheit (703, 707), die den dritten Multimediainhalt (M11, M3, M33) gemäß den Profilinformationen bereitstellt;
- wobei der mindestens eine zweite Multimediainhalt (M2, M22) über den Kanal per Streaming übertragen wird;
- wobei die Empfangseinheit (701, 705) zusätzliche Steuerdaten, die über einen zusätzlichen Kanal per Streaming übertragen werden, empfängt;
- wobei die Verarbeitungseinheit (702, 706) die Steuerdaten (C2, C22), die zusätzlichen Steuerdaten und den mindestens einen zweiten Multimediainhalt (M2, M22) in einen vereinigten Kanal vereinigt;
- wobei die Bereitstellungseinheit (703, 707) den vereinigten Kanal gemäß den Profilinformationen bereitstellt.

11. Vorrichtung nach Anspruch 10, wobei die Bereitstellungseinheit (703, 707) den dritten Multimediainhalt (M11, M3, M33) in Abhängigkeit von den Profilinformationen komprimiert und/oder codiert.

12. Vorrichtung nach einem der Ansprüche 10 oder 11,
- wobei der mindestens eine zweite Multimediainhalt (M2, M22) über den Kanal per Streaming übertragen wird,
- wobei die Verarbeitungseinheit (702, 706) den Kanal gemäß den Profilinformationen durch Löschen von Teilen der Steuerdaten (C2, C22) und/oder durch Löschen von mindestens einem des mindestens einen zweiten Multimediainhalts (M2, M22) filtert und
- wobei die Bereitstellungseinheit (703, 707) den gefilterten Kanal gemäß den Profilinformationen bereitstellt.

## Revendications

1. Un procédé d'adaptation d'un premier contenu multimédia (M1, M11) comprenant :
- la réception (101) dudit premier contenu multimédia (M1, M11),
- la réception de données de commande (C2, C22) et d'au moins un deuxième contenu multimédia (M2, M22), lesdites données de commande (C2, C22) étant diffusées en continu sur un canal (102),
- la détermination d'au moins une spécification de remplacement en fonction desdites données de commande (C2, C22) et d'une information de profil (103),
- l'identification d'au moins un objet remplaçable dans ledit premier contenu multimédia (M1, M11) selon ladite au moins une spécification de remplacement (104),
- la création d'un troisième contenu multimédia (M11, M3, M33) par l'adaptation dudit au moins un objet remplaçable dans ledit premier contenu multimédia (M1, M11) en fonction dudit au moins un deuxième contenu multimédia (M2, M22) et de ladite au moins une spécification de remplacement (105),
- la fourniture dudit troisième contenu multimédia (M11, M3, M33) selon ladite information de profil (106),
- ledit au moins un deuxième contenu multimédia (M2, M22) étant diffusé en continu sur ledit canal,
- la réception de données de commande additionnelles diffusées en continu sur un canal additionnel,
- l'agrégation desdites données de commande (C2, C22), desdites données de commande additionnelles et dudit au moins un deuxième contenu multimédia (M2, M22) en un canal agrégé,
- la fourniture dudit canal agrégé selon ladite information de profil.

2. Le procédé selon la revendication 1, comprenant :
- le filtrage dudit canal selon ladite information de profil par la suppression de parties desdites données de commande (C2, C22) et/ou par la suppression d'au moins un desdits au moins un deuxième contenu multimédia (M2, M22), et
- la fourniture dudit canal filtré selon ladite information de profil.

3. Le procédé selon l'une quelconque des revendications précédentes comprenant :
- le décodage et/ou la décompression (113) dudit premier contenu multimédia (M1, M11) et/ou dudit au moins un deuxième contenu multimédia (M2, M22).

4. Le procédé selon l'une quelconque des revendications précédentes comprenant :
- la compression et/ou le codage dudit troisième contenu multimédia (M11, M3, M33) en fonction de ladite information de profil (116).

5. Le procédé selon l'une quelconque des revendications précédentes, dans lequel ledit premier contenu multimédia (M1, M11) est diffusé en continu sur un autre canal.

6. Le procédé selon l'une quelconque des revendications précédentes,
- dans lequel lesdites données de commande (C2, C22) comprennent une première référence audit premier contenu multimédia (M1, M11) et/ou un ensemble de références de canal, et
- dans lequel lesdites données de commande (C2, C22) comprennent une deuxième référence audit au moins un deuxième contenu multimédia (M2, M22).

7. Le procédé selon l'une quelconque des revendications précédentes, dans lequel ledit au moins un deuxième contenu multimédia (M2, M22) comprend des informations de nom d'objet et des informations d'attribut d'objet.

8. Le procédé selon l'une quelconque des revendications précédentes,
- dans lequel ladite spécification de remplacement comprend une reconnaissance vidéo trame par trame et/ou audio pour ladite identification dudit au moins un objet remplaçable,
- ladite spécification de remplacement comprend une adaptation trame par trame pour ladite adaptation dudit au moins un objet remplaçable.

9. Le procédé selon l'une quelconque des revendications précédentes, dans lequel ladite spécification de remplacement comprend une évaluation d'informations de balisage MPEG-4 pour ladite identification dudit au moins un objet remplaçable.

10. Un appareil d'adaptation d'un premier contenu multimédia (M1, M11) comprenant :
- une unité de réception (701, 705) recevant ledit premier contenu multimédia (M1, M11), lesdites données de commande (C2, C22) et au moins un deuxième contenu multimédia (M2, M22), lesdites données de commande (C2, C22) étant diffusées en continu sur un canal,
- une unité de traitement (702, 706) déterminant au moins une spécification de remplacement en fonction desdites données de commande (C2, C22) et d'une information de profil, identifiant au moins un objet remplaçable dans ledit premier contenu multimédia (M1, M11) selon ladite au moins une spécification de remplacement et créant un troisième contenu multimédia (M11, M3, M33) par l'adaptation dudit au moins un objet remplaçable dans ledit premier contenu multimédia (M1, M11) en fonction dudit au moins un deuxième contenu multimédia (M2, M22) et de ladite au moins une spécification de remplacement, et
- une unité d'approvisionnement (703, 707) fournissant ledit troisième contenu multimédia (M11, M3, M33) selon ladite information de profil,
- ledit au moins un deuxième contenu multimédia (M2, M22) étant diffusé en continu sur ledit canal,
- ladite unité de réception (701, 705) recevant des données de commande additionnelles diffusées en continu sur un canal additionnel,
- ladite unité de traitement (702, 706) agrégeant lesdites données de commande (C2, C22), lesdites données de commande additionnelles et ledit au moins un deuxième contenu multimédia (M2, M22) en un canal agrégé,
- ladite unité d'approvisionnement (703, 707) fournissant ledit canal agrégé selon ladite information de profil.

11. L'appareil selon la revendication 10, dans lequel ladite unité d'approvisionnement (703, 707) comprime et/ou code le troisième contenu multimédia (M11, M3, M33) en fonction de ladite information de profil.

12. L'appareil selon l'une quelconque des revendications 10 ou 11,
- dans lequel ledit au moins un deuxième contenu multimédia (M2, M22) est diffusé en continu sur ledit canal,
- dans lequel ladite unité de traitement (702, 706) filtre ledit canal selon ladite information de profil par la suppression de parties desdites données de commande (C2, C22) et/ou par la suppression d'au moins un desdits au moins un deuxième contenu multimédia (M2, M22), et
- dans lequel ladite unité d'approvisionnement (703, 707) fournit ledit canal filtré selon ladite information de profil.
